Europäisches Patentamt

European Patent Office

Office européen des brevets

(11) Veröffentlichungsnummer: **0 264 526 B1**

(12) **EUROPÄISCHE PATENTSCHRIFT**

(45) Veröffentlichungstag der Patentschrift: **03.06.92**

(21) Anmeldenummer: **87104130.7**

(22) Anmeldetag: **20.03.87**

(51) Int. Cl.⁵: **G01N 19/02**

(54) **Verfahren und Vorrichtung zum Ermitteln des dynamischen Grenzwinkels der Haftreibung von Schuhen auf einem Untergrund.**

(30) Priorität: **16.10.86 DE 3635263**

(43) Veröffentlichungstag der Anmeldung:
**27.04.88 Patentblatt 88/17**

(45) Bekanntmachung des Hinweises auf die Patenterteilung:
**03.06.92 Patentblatt 92/23**

(84) Benannte Vertragsstaaten:
**DE FR GB**

(56) Entgegenhaltungen:
US-A- 3 187 552
US-A- 3 975 940

PATENT ABSTRACTS OF JAPAN, Band 6, Nr. 221 (P-153)[1099], 5. November 1982;& JP-A-57-125 832

SOVIET INVENTIONS ILLUSTRATED, Woche E/40, 17. November 1982, Zusammenfassung Nr. N2079 E/40, Derwent Publications Ltd, London, GB; & SU-A-888 018

(73) Patentinhaber: **Funck, Herbert, Dr.-Ing.**
**Am Wasserbogen 43**
**W-8032 Gräfelfing-Lochham(DE)**

(72) Erfinder: **Funck, Herbert, Dr.-Ing.**
**Am Wasserbogen 43**
**W-8032 Gräfelfing-Lochham(DE)**

(74) Vertreter: **Patentanwälte Beetz sen. - Beetz jun. Timpe - Siegfried - Schmitt-Fumian Steinsdorfstrasse 10 W-8000 München 22(DE)**

## Beschreibung

Die Erfindung betrifft ein Verfahren und eine Vorrichtung zum Ermitteln des Rutschwinkels bzw. dynamischen Grenzwinkels der Haftreibung von Schuhen auf einem Untergrund.

Um Arbeitsunfälle durch Ausrutschen und Stürze des Arbeiters zu vermindern, wurden sowohl rutschhemmende Bodenbeläge als auch Arbeitsschuhe mit besonders rutschfesten Sohlen entwickelt. Ein für das Rutschverhalten besonders aussagekräftiger Parameter ist der dynamische Grenzwinkel der Haftreibung von Schuhen auf einem geneigten Untergrund. Zur Ermittlung dieses Grenzwinkels wurde bereits ein Verfahren vorgeschlagen, nach dem ein definiert präparierter Boden von verschiedenen Versuchspersonen mit den entsprechenden Schuhen begangen wird. Der Boden ist in diesen Versuchen ein mit einer Gleitschicht versehener Stahlboden. Dieser Boden wird im Laufe des Begehungsversuches in kleinen Winkelschritten so lange geneigt, bis die Versuchsperson meint, eine weitere Neigung des Stahlbodens würde unweigerlich zum Ausrutschen führen. Es kommt bei diesem Versuch also in großem Maße auf das subjektive Sicherheitsgefühl der jeweiligen Versuchsperson an, das von Umständen beeinflußt wird, die nicht in dem verwendeten Schuhwerk begründet sind. So wird z. B. im Laufe einer Versuchsreihe eine Versuchsperson immer vertrauter mit dem Begehen einer glatten geneigten Oberfläche, so daß sich das Unsicherheitsgefühl beim zuletzt getesteten Schuhwerk mit großer Wahrscheinlichkeit erst bei größeren Neigungswinkeln einstellt. Es ist daher erforderlich, solche Versuchsreihen mit einer großen Anzahl an Testpersonen durchzuführen und die Ergebnisse anschließend zu mitteln. Die große Streuung der einzelnen Meßwerte um die so erhaltenen Mittelwerte herum läßt jedoch Zweifel an der Aussagefähigkeit solcher Mittelwertkurven aufkommen. Ferner ist bei diesem Verfahren der Aufwand an Zeit und Personal so groß, daß es schon aus diesen Gründen beim Schuh- bzw. Sohlenhersteller selbst nicht anwendbar ist.

Zur Prüfung von Bodenbelägen wurde ein sogenanntes Abgleitverfahren entwickelt, bei dem in Horizontallage des Bodenbelags ein Körper mit einem bestimmten Gewicht mit bestimmten Schuhsohlen auf den Bodenbelag aufgesetzt wird und der Bodenbelag anschließend so weit verkippt wird, bis die Schuhsohlen auf dem Bodenbelag ins Rutschen kommen. Da bei diesem Verfahren die Schuhsohlen in Horizontalstellung des Bodenbelags voll belastet werden, können sich jedoch Saugeffekte zwischen dem Schuhsohlenbelag und der glatten Oberfläche einstellen, so daß der mit dieser Methode ermittelte Haftreibungsgrenzwinkel in solchen Fällen größer ist als ein in der Praxis tatsächlich erreichbarer Haftgrenzwinkel.

Aus der JP-A-57/125 832 ist eine Vorrichtung zur Ermittlung des Rutschverhaltens eines Schuhs auf einem Bodenbelag bekannt, bei welcher die Neigung des Bodenbelags kontinuierlich mittels eines Elektromotors solange vergrößert wird, bis der auf dem Belag ruhende Schuh zu rutschen beginnt. Dieser Zustand wird registriert und ausgewertet.

Der Erfindung liegt die Aufgabe zugrunde, ein Verfahren und eine Vorrichtung anzugeben, mit denen die Rutscheigenschaften bzw. dynamischen Grenzwinkel der Haftreibung von Schuhen auf einem Untergrund unter definierten Randbedingungen reproduzierbar, mit einfachen Mitteln und relativ schnell ermittelt werden können.

Diese Aufgabe wird anspruchsgemäß gelöst.

Der Grundgedanke der Erfindung liegt darin, Begehungsversuche möglichst wirklichkeitsnah zu simulieren, wobei das Aufsetzen eines Schuhs auf eine Unterlage und dessen Gewichtsbelastung unter genau definierbaren und einstellbaren Randbedingungen reproduzierbar erfolgt und Schrittvorgänge praxisnah simuliert werden.

Ein auf einen Leisten gespannter Schuh oder ein leistenähnlicher Prüfkörper mit Zuschnitten aus Sohlenmaterial an seiner Unterseite wird mit einer vorgegebenen Gewichtskraft auf den Untergrund aufgesetzt. Kommt der Schuh dabei nicht ins Rutschen, wird der Schuh angehoben und der Untergrund um einen bestimmten Winkel geneigt, um dann den Prüffuß bzw. Schuh erneut aufzusetzen. Dieses Vorgehen wird so lange wiederholt, bis der Schuh beim Aufsetzen ausgleitet, d. h. der dynamische Grenzwinkel der Haftreibung zwischen dem Schuh und dem geneigten Untergrund überschritten ist. Dieser Grenzwinkel wird hier dynamischer Grenzwinkel der Haftreibung genannt, da erfindungsgemäß die Haftreibung unmittelbar beim Aufsetzen des Schuhs auf eine geneigte Unterlage und dessen Belasten ermittelt wird, der Schuh also noch nicht voll belastet auf Untergrund steht, wenn dieser geneigt wird. Dabei werden mögliche Saugeffekte zwischen der Schuhsohle bzw. den Zuschnitten und dem ggf. mit einem Gleitmittel versehenen Untergrund vermieden.

Die erfindungsgemäße Vorrichtung zeichnet sich durch ihren mechanisch einfachen Aufbau aus und ermöglicht die Durchführung von Reihenuntersuchungen verschiedener Sohlenmaterialien bereits in einem sehr frühen Entwicklungsstadium durch die Sohlenhersteller.

Die erfindungsgemäße Vorrichtung kann schließlich mit einfachen Mitteln an verschiedene Versuchsbedingungen und Schuharten angepaßt werden. So kann der Bodenbelag schnell ausgetauscht und z.B. zum Ausgleich von Dickenunterschieden des Belags oder der Sohlen in seiner Höhe so eingestellt werden, daß beim Aufsetzen die Achse des Knöchelgelenks mit der Schwenkachse des Belagträgers zusammenfällt. Dies ermöglicht auch gleiche Versuchsbedingungen bei der Prüfung von unterschiedlichen Schuharten und -größen. Der Prüffuß bzw. ein Leisten mit Schuh kann ferner mittels eines Drehgelenks gedreht bzw. mittels eines Kugelgelenks in jeder beliebigen Stellung bezüglich des Bodenbelags orientiert werden, was die Simulation sowohl eines "Talwärtsgehens" als auch eines "Bergwärtsgehens" ermöglicht. Dabei wird dem Umstand Rechnung getragen, daß beim Talwärtsgehen ein Ausrutschen zu einer Knickbewegung des Beines aus dem Hüftgelenk heraus und beim Bergwärtsgehen ein Ausrutschen zu einer Schwenkbewegung aus dem Kniegelenk führt. Diese Unterschiede können durch vorbestimmte Einstellungen der Verdrehhemmungen berücksichtigt werden.

Es hat sich gezeigt, daß bei einer Reihe von Sohlen/Belag-Kombinationen der Ausgleitvorgang spontan und damit für den Träger gefährlich und bei anderen Kombinationen allmählich einsetzt. Im letzteren Fall zeigen sich Anzeichen beginnenden Gleitens, bevor der eigentliche Ausgleitvorgang die Prüfung durch völliges Abrutschen des Schuhs beendet. Diese Anzeichen sind daran zu erkennen, daß der Prüffuß nach dem Aufsetzen langsam zu gleiten beginnt, jedoch noch nicht völlig abrutscht, weil die Zeit, in welcher der Schuh in belastetem Zustand auf der Bodenbelagsebene steht, aufgrund des eingestellten Schrittzyklus verhältnismäßig kurz ist und der Schuh wieder abgehoben wird, bevor er völlig abrutschen kann. Diese Phase des Gleitbeginns kann sich bei manchen Schuhsohlen/Bodenbelag-Kombinationen insbesondere bei Verwendung von flüssigen Zwischenmedien über eine erhebliche Anzahl von bis zu zehn Prüfzyklen, also über fünf Winkelgrade der Belagneigung, erstrecken. Um diese Phase des Gleitbeginnes und ggf. auch die Anzahl der Schritte in dieser Phase zusätzlich zum Haftreibungswinkel zu erfassen und dadurch eine wichtige weitere Aussage über die Rutschhemmung von Schuhen zu erhalten, zeichnet sich eine zweckmäßige Ausgestaltung der Erfindung durch dadurch aus, daß die Auslenkung der zwischen dem Hüftgelenk und dem Knöchelgelenk vorgesehenen Laschen aus ihrer unbelasteten Endlage mit Hilfe eines Sensors erfaßt und über ein von diesem aktiviertes Meßgerät angezeigt und/oder schriftlich festgehalten wird. Der Sensor kann ein pneumatischer Schalter sein, der von den in ihrer Normallage befindlichen Laschen geschlossen gehalten wird und bei Beginn der Laschen-Auslenkung, die den Beginn der Gleitphase des Prüffußes kennzeichnet, ein Signal erzeugt, das ein Zählwerk für die nachfolgenden Schrittzyklen - bis zum endgültigen Ausrutschen - registriert. Als Sensoren und Anzeigeeinrichtungen können auch elektrische, elektronische bzw. elektromagnetische Bauelemente eingesetzt werden, welche die erfaßte Anzahl an Gleitschritten bei jedem Prüfvorgang auch schriftlich festhalten können.

Der dynamische Grenzwinkel der Haftreibung wird bei der erfindungsgemäßen Vorrichtung zweckmäßigerweise durch eine Anzeigeneinrichtung erfaßt, die in ihrer einfachsten Ausführung einen sog. Schleppzeiger aufweist, der von einem Lagerzapfen der Tragkonstruktion vor einer Scheibe mit Winkelskala bewegt wird und im maximalen Neigungswinkel der Tragkonstruktion stehenbleibt.

Die Praxis hat gezeigt, daß mit einem Schuh etwa sechs Meßreihen durchzuführen sind, bis sich der Meßwert stabilisiert, wobei dann das Prüfergebnis aus dem Mittelwert der letzten zwei oder drei Meßergebnisse errechnet wird. Um eine selbständige Registrierung der Meßergebnisse der mit einem Schuh bzw. einer Sohle durchgeführten Meßreihen zu erzielen, wurde eine spezielle Anzeigeneinrichtung mit Registrierbögen entwickelt, bei der auf einem einzelnen Registrierbogen so viele kreissegmentförmige parallele Skalen vorgezeichnet sind, wie Messungen für ein Objekt durchgeführt werden. Der Registrierbogen wird vor jeder Meßserie auf einer plattenförmigen Halterung in einer bestimmten Lage angebracht. Ein Schreibstift wird mit leichtem Andruck am Nullpunkt der ersten Kreissegmentskala zur Anlage gebracht und bei jedem Meßvorgang entsprechend der Neigung der Tragkonstruktion bewegt. Nach einer Meßreihe, d. h. nach Erreichen bzw. Überschreiten der Rutschgrenze der untersuchten Sohle, kehrt der Schreibstift selbsttätig in seine Nullage zurück und die plattenförmige Halterung wird zusammen mit dem Registrierbogen über z.B. einen Druckmittelzylinder um einen Skalenabstand verschoben und arretiert. Anschließend kann die zweite Meßreihe am gleichen Objekt durchgeführt werden, wobei der Schreibstift die jeweilige Winkellage der Tragkonstruktion auf dem Registrierbogen aufzeichnet. Nach der Registrierung der notwendigen Anzahl von Meßreihen wird die Platte in ihre Ausgangslage zurückgebracht.

Ein besonders zweckmäßiger Registrierbogen hat Din A4-Format und eine eingestanzte Abheftlochung, die gleichzeitig dazu dient, den Bogen über entsprechende Stifte auf der plattenförmigen Halterung festzulegen. Zusätzlich zu den Winkelskalen können auf diesem Registrierbogen Flächen zur Eintragung verschiedener Daten über die Prüfstelle, das Prüfobjekt, die Prüfbedingungen od. dgl. vorgezeichnet sein.

Der Haftreibungswinkel kann auch mit Hilfe eines Zählwerks registriert werden, welches bei einer exakten Verstellung der Neigung des Bodenbelagträgers von jeweils einem bestimmten Winkelgradteil pro Schrittzyklus die Anzahl der Schritte bis zum Abrutschen des Schuhs bzw. Prüffußes aufzählt und ggf. auf einen Protokollbogen ausdruckt, auf dem auch die Ergebnisse der Gleitschritt-Zählung vor dem Abrutschen ausgeschrieben werden.

Für eine Reihe von Anwendern, z.B. für die Hersteller von Schuhsohlen, ist es besonders günstig, wenn die Rutschfestigkeit nicht nur von fertigem Schuhwerk, sondern auch von verschiedenen infrage kommenden Sohlenmaterialien und -profilen untersucht und geprüft werden kann, weil dadurch die aufwendige und kostspielige Herstellung von Prototypen vermieden wird. Um auch unterschiedliche Sohlenmaterialien und Profilarten auf einfache Weise untersuchen zu können, wurde ein neuer Prüffuß entwickelt, an dessen Boden Zuschnitte aus plattenförmigem Sohlenmaterial in besonderen Aufnahmen befestigt werden können. Dieser Prüffuß kann statt des normalerweise bei der Prüfung eines Schuhs erforderlichen Leisten am Klemmgelenk-Gestänge der Prüfvorrichtung befestigt werden. Bevorzugt wird jeweils ein Zuschnitt im Absatzbereich und ein weiterer im Ballenbereich am Prüffuß befestigt, wobei die Zuschnitte Kreisform haben und ihre Größe in etwa der Aufstandsfläche eines Schuhs im Absatzbereich und im Ballenbereich entspricht. Entsprechend den unterschiedlichen Abmessungen dieser Aufstandsflächen wird für den Zuschnitt im Absatzbereich ein Durchmesser von 50 mm und für den Zuschnitt im Ballenbereich ein Durchmesser von 70 mm gewählt. Die Kreisform der Zuschnitte ist insofern günstig, weil durch einfaches Verdrehen in den jeweiligen Aufnahmen auch Profile in unterschiedlicher Ausrichtung zur simulierten Schrittbewegung untersucht werden können. Um möglichst realistische Versuchsbedingungen einzuhalten, sollte die Höhe der Aufnahme für den Zuschnitt am Absatz um das Maß der Absatzsprengung größer als an der Ballenpartie sein, wobei ein Aufmaß für die Brand- und Laufsohlen vorgesehen wird. Durch diese Maßnahmen wird gewährleistet, daß der neue Prüffuß mit den eingesetzten Zuschnitten aus Sohlenmaterialien ähnliche Größenverhältnisse zum Knöchelgelenk hat wie ein auf einem Leisten aufgezogener fertiger Prüfschuh.

Im folgenden werden Ausführungsbeispiele der Erfindung anhand der Zeichnung im einzelnen beschrieben. Es zeigen:

Fig. 1     eine teilgeschnittene Seitenansicht einer ersten Ausführung einer Prüfvorrichtung;

Fig. 2     eine teilgeschnittene Rückansicht einer ähnlichen Ausführung der Vorrichtung;

Fig. 3     eine Anzeigeneinrichtung in Seitenansicht;

Fig. 4     einen bei der Anzeigeneinrichtung nach Fig. 3 verwendeten Registrierbogen;

Fig. 5     einen Ausschnitt einer anderen Ausführung der Vorrichtung nach Fig. 1 mit Erfassung des Gleitbeginns;

Fig. 6     einen Prüffuß in Seitenansicht;

Fig. 7     den Prüffuß nach Fig. 6 im Schnitt A-B;

Fig. 8     den Prüffuß nach Fig. 6 in Unteransicht.

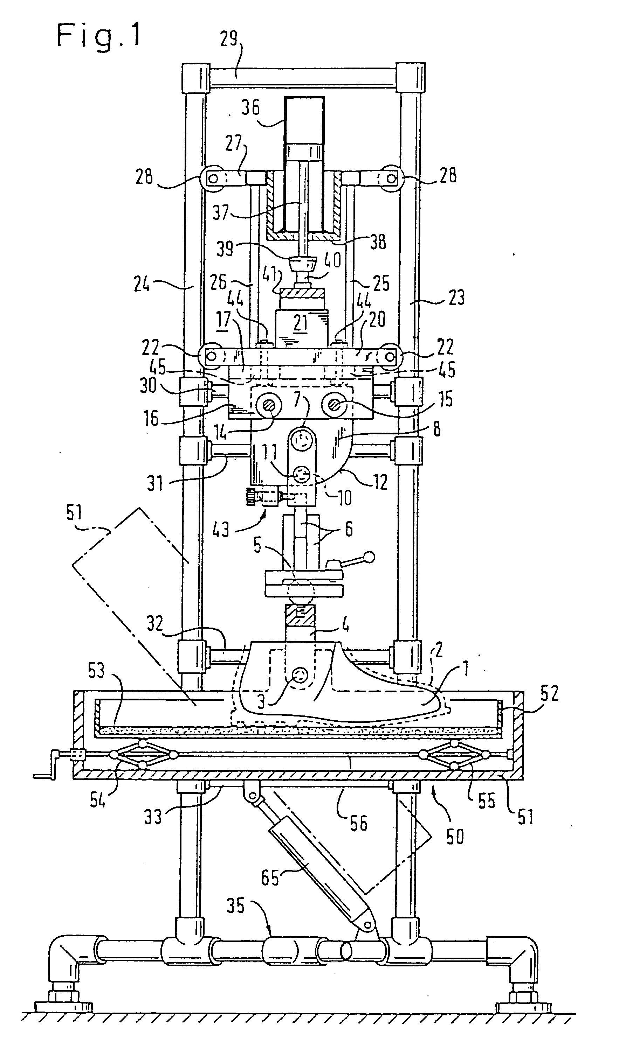

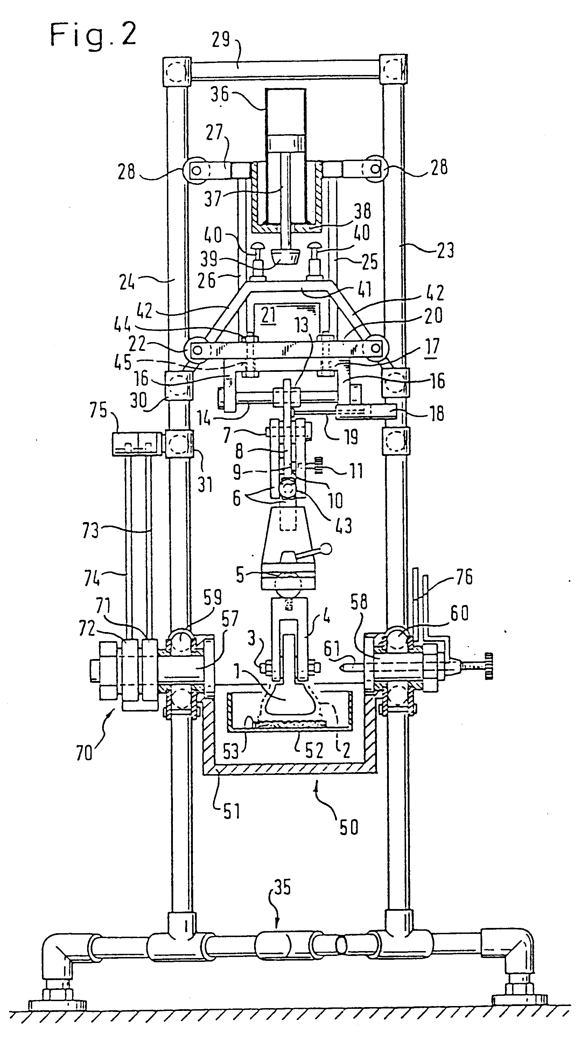

Bei der Vorrichtung nach Fig. 1 und 2 ist ein Schiebeleisten 1 mit einem fertigen Schuh 2 über ein in Knöchelhöhe angeordnetes Gelenk 3 lösbar an einer Schelle 4 angelenkt. Das Gelenk 3 weist eine Verdrehbremse mit einstellbarer Bremskraft auf. Das obere Ende der Schelle 4 ist über ein feststellbares Kugelgelenk 5 oder über ein feststellbares Drehgelenk mit zwei Laschen 6 verbunden, die mittels eines Gelenkbolzens 7 an einer vertikalen Platte 8 gelenkig angehängt sind. Die Achse des Gelenkbolzens 7 verläuft parallel zu der des "Knöchelgelenks" 5. Unter dem Gelenkbolzen 7 ist eine Verdrehhemmung vorgesehen, die entweder als Kugelraste 9 ausgeführt sein kann, deren Kugel 10 in einer Bohrung der Lasche 6 sitzt und durch die Kraft einer Feder in eine kugelschalenförmige Einsenkung in der Platte 8 gedrückt wird, oder als Reibungsbremse, bei der lediglich die oben erwähnte Einsenkung in der Platte 8 weggelassen ist, so daß keine bestimmte Raststellung vorgegeben ist. Die Kugel 10 kann in diesem Fall zweckmäßigerweise durch einen zylinderförmigen Bremsklotz ersetzt werden. Die Vorspannung der Feder ist mittels einer Stellschraube 11 einstellbar. An der nicht abgerundeten Unterkante der Platte 8 ist ein mittels einer Schraube einstellbarer Anschlag 43 für die Festlegung der Ausgangsstellung der Laschen 6 vorgesehen. Durch die Einstellung des Anschlags 43 kann dem Gelenkgestänge 4 bis 16 bei der Durchführung des Verfahrens eine "talwärts" gerichtete Neigung aufgeprägt werden. Andererseits kann mit dem Anschlag eine Auslenkung des Schuhs in Fersenrichtung kompensiert werden, die dadurch hervorgerufen wird, daß Schuh und Leisten im vor dem Knöchelgelenk gelegenen Teil schwerer sind als im Fersenbereich. Mit dem feststellbaren Kugelgelenk 5 bzw. einem Drehgelenk wird ein Schuh 2 mit seinem Leisten 1 vor Beginn einer Versuchsreihe justiert, um die korrekte Auflage des Schuhs auf einem Bodenbelag zu erhalten. Ferner kann der Schuh bei gelöster Klemmung im Kugelgelenk 5 um die Vertikalachse um 180° verdreht werden. Schließlich kann mit Hilfe des Kugelgelenks 5 ein etwas schräges Sitzen des Schuhs 2 auf dem Leisten 1 ausgeglichen werden.

Die Platte 8 hat eine abgerundete untere Ecke 12 und ist mittels Schiebemuffen 13 an zwei parallelen Tragbolzen 14, 15 aufgehängt, die in den beiden vertikalen Schenkeln 16 eines U-Profils 17 befestigt sind. Zur Querverschiebung der Platte 8 ist ein ortsfester Stellzylinder 18 vorgesehen, dessen zu den Bolzen parallel Kolbenstange 19 an der Platte 8 befestigt ist. Das U-Profil 17 ist an der Unterseite einer Tragplatte 20 befestigt, auf die Gewichte 21 aufgelegt werden. Die Befestigung erfolgt mittels Verschraubung 44, wobei entweder in der Tragplatte 20 oder in der Grundplatte des U-Profils senkrecht zu den Achsrichtungen ausgedehnte Langlöcher 45 vorgesehen sind, so daß eine Ausrichtung des den Leisten 1 tragenden Gestänges (3 bis 16) in der durch die Schuhspitze und -ferse definierten Richtung erfolgen kann. Die Tragplatte 20 ist durch seitlich angeordnete Laufrollen 22 an vertikalen Ständerrohren 23, 24 geführt und über Streben 25, 26 mit einem oberen Rahmen 27 verbunden, der ebenfalls mittels Laufrollen 28 an den Ständerrohren 23, 24 geführt ist. Die Rohrständer 23, 24 sind durch Querstreben 29 bis 33, ein oberes Querhaupt und eine Fußkonstruktion 35 untereinander versteift. Am oberen Rahmen 27 ist als Hubeinrichtung eine Kolben-Zylindereinheit 36 befestigt, deren Kolbenstange 37 eine abgesenkte Platte 38 am Rahmen 27 mit Spiel durchragt und die an ihrem vorstehenden Ende einen Anschlagkopf 39 trägt.

Wie aus Fig. 2 ersichtlich, sind zwei stoßdämpfende Druckschalter 40 auf einer Platte 41 angeordnet, die über Schrägstreben 42 an den Ständerrohren 23, 24 befestigt ist. Im unteren Teil ist zwischen den Ständerrohren 23, 24 eine Tragkonstruktion 50 vorgesehen, die einen formsteifen äußeren Kasten 51 und einen wannenförmigen Einsatz 52 als Träger für einen Belag 53 aufweist. Zwischen dem Boden des Einsatzes 52 und des Kastens 51 ist eine Hubvorrichtung in Form von mindestens zwei Parallelogramm-Gestängen 54, 55 und einer Gewindespindel 56 vorgesehen. Durch Betätigen der Gewindespindel 56 kann die Höhenlage des Einsatzes 52 mit dem Belag 53 feinfühlig an unterschiedliche Schuhgrößen und -formen angepaßt werden. In den beiden Seitenwänden des Kastens 51 sind Lagerzapfen 57, 58 befestigt, die in je einem zwischen zwei Querholmen festlegbarem Lager 59, 60 gelagert sind. Die Achsen der Lagerzapfen 57, 58 fallen bei der Durchführung des Verfahrens mit der Achse des Gelenkbolzens 3 zusammen. Da durch Verschiebung des U-Profils 17 oder Vorauslenkung der Laschen 6 mittels des einstellbaren Anschlags 43 die Lagerzapfen 57, 58 und der Gelenkbolzen nicht mehr auf einer Achse liegen, ist eine Ausrichtung der Tragkonstruktion 50 erforderlich, die dadurch erreicht wird, daß die Lager 59, 60 auf den Querholmen verschoben werden. Ein Ausrichten der Tragkonstruktion 50 ist nicht erforderlich, wenn der Anschlag 43 und die Verschiebung des U-Profils 17 so aufeinander abgestimmt erfolgen, daß die Lage des Gelenkbolzens 3 relativ zu den Lagerzapfen 57, 58 nicht verändert wird. An der Innenseite der einen Seitenwand ist in der Achse ein Justierstift 61 angeordnet, der die Höheneinstellung des Belageinsatzes 52 und die Ausrichtung des Leistens 2 im Kugelgelenk 5 bzw. Drehgelenk beim Prüfen von höheren Schuhen und beim Ausrichten der Tragkonstruktion erleichtert.

Die beiden Ausführungen gemäß Fig. 1 und 2 sind in der vorstehend beschriebenen Weise gleich aufgebaut. Unterschiedlich sind jedoch die Antriebsvorrichtungen zum Verstellen der Neigung der Tragkonstruktion 50.

Das Verschwenken der Tragkonstruktion 50 erfolgt bei dem in Fig. 1 gezeigten Ausführungsbeispiel mit Hilfe einer Kolben-Zylindereinheit 65, deren Zylinder an einer Querstrebe 35 der Fußkonstruktion abgestützt ist und dessen Kolbenstange am Boden des Kastens 51 angreift.

Bei der Ausführung nach Fig. 2 ist auf dem verlängerten Endteil des Lagerzapfens 57 eine Ratschenvorrichtung 70 angeordnet, die zwei nebeneinandersitzende Klemmbuchsen 71, 72 und daran befestigte Hebel 73, 74 enthält. Durch wechselweises Verschwenken der Hebel, z.B. mittels eines Stellzylinders 75 oder von Hand, wird die Tragkonstruktion um vorgegebene Winkelbeträge schrittweise geneigt und anschließend wieder arretiert.

Die Ermittlung des dynamischen Grenzwinkels der Haftreibung eines Schuhs oder von Zuschnitten aus einem Sohlenmaterial auf einem bestimmten Belag vollzieht sich wie folgt:
Durch Beaufschlagen der Kolben-Zylindereinheit 36 mit einem Druckmittel wird der Leisten 1 aus seiner dargestellten Position in eine angehobene Stellung gebracht und der zu prüfende Schuh 2 aufgezogen. Anschließend erfolgt ein Absenken des Leistens 1 und die genaue Ausrichtung des Schuhs 2 mit Hilfe des stellbaren Kugelgelenks 5 sowie die richtige Positionierung des Belags 53 durch Betätigen der Hubvorrichtung 54 bis 56. Nach diesen Justiervorgängen kann mit der eigentlichen Rutschprüfung begonnen werden. Durch Druckmittelbeaufschlagung des Zylinders 36 gelangt der verdickte Kopf 39 in Anlage an die Platte 41 und hebt anschließend den Leisten 1 mit dem Schuh 2 in die festgelegte Ausgangslage. Mit Hilfe der jeweiligen Antriebsvorrichtung 65 bzw. 70 gemäß Fig. 1 bzw. 2 wird die Tragkonstruktion in eine bestimmte Schräglage geschwenkt. Durch Entlüften des Zylinders 36 erfolgt eine Abwärtsbewegung des Leistens 1 mit einer Geschwindigkeit, die durch die Größe der Gewichte 21 und/oder durch einen gesteuerten Druckmittelauslaß aus dem Zylinder 36 bestimmt werden kann. Der auf dem Leisten 1 aufgespannte Schuh 2 trifft mit dem Absatzende - oder bei um 180° verdrehter Ausrichtung mit der Sohlenspitze - auf den schräggestellten Belag 53 auf. Sobald die Gewichtskraft der Gewichte 21 zur Wirkung gelangt, wird die Hemmung der Verdrehbremse im Gelenk 3 überwunden, so daß der Schuh 2 mit dem Leisten 1 im Gelenk 3 verschwenkt und sich seine Sohle flächig auf den Belag 53 legt. Dabei fährt die Kolbenstange 37 um einen bestimmten Betrag weiter nach oben, so daß der Kopf 39 von der Platte 41 freikommt. Falls der Schuh 2 bei diesem Absenkversuch auf dem Belag 53 nicht rutscht, wird er durch erneute Druckmittelzufuhr zum Zylinder 36 wieder in seine obere Ausgangsstellung angehoben. Die Tragkonstruktion 50 mit dem Belag 53 wird um einen vorbestimmten Winkelschritt stärker geneigt und arretiert, woraufhin der Schuh 2 mit dem Leisten 1 erneut abgesenkt wird. Diese Vorgänge mit schrittweiser Vergrößerung des Neigungswinkels der Tragkonstruktion werden so lange wiederholt, bis der dynamische Grenzwinkel der Haftreibung erreicht bzw. überschritten ist und der Schuh 2 auf dem Belag 53 rutscht. Dabei erfolgt eine Auslenkung der Laschen 6 gegenüber der vertikalen Tragplatte 8 um den Gelenkbolzen 7 unter Überwindung des voreingestellten Widerstandes der Kugelraste 10, 11 bzw. alternativ der Verdrehhemmung ohne Raststellung, was eine Bewegung des Schuhs 2 in Abrutschrichtung zur Folge hat. Der Tragrahmen 25, 26, 27 bewegt sich durch Gravitation weiter abwärts, bis die Halteplatte 38 auf den Schaltern 40 aufsitzt, die gleichzeitig eine stoßdämpfende Wirkung haben. Es können auch gesonderte Stoßdämpfer und Schalter verwendet werden. Durch Aktivierung des Schalters 40 wird die Vorrichtung abgeschaltet, woraufhin der ermittelte dynamische Grenzwinkel der Haftreibung z. B. an einer auf dem Lagerzapfen 58 der Tragkonstruktion 50 befestigten Winkelskala 76 abgelesen werden kann. Damit ist die Ermittlung des dynamischen Grenzwinkels der Haftreibung für die eingesetzte Material-Paarung Schuhsohle - Belag abgeschlossen.

Bei bestimmten Versuchen werden Bodenbeläge verwendet, deren Oberfläche zusätzlich präpariert wird. Das heißt, es werden reibungsvermindernde Schmiermittel auf den Bodenbelag aufgetragen, um z. B. einen mit Öl verschmutzten Werkstattboden zu simulieren. Da in diesem Fall das Absenken eines Schuhs zu einer Verdrängung des Schmiermittels unterhalb der Schuhsohle aufgrund der darin in der Regel ausgearbeiteten Drainagerillen erfolgt, würde ein ständiges Absenken des Schuhs auf dieselbe Stelle auf dem Bodenbelag zu verfälschten Ergebnissen führen. Um dies zu vermeiden, wird die Tragplatte 8 und damit der Leisten mit dem Schuh parallel zur Achsrichtung der Gelenke auf den Bolzen 14, 15 vor jedem Absenkvorgang durch den Stellzylinder 18 querverschoben, so daß der Schuh 2 nicht auf einen Bodenbelagsbereich auftrifft, von dem aufgetragenes Schmiermittel durch vorherige Versuche bereits verdrängt worden ist.

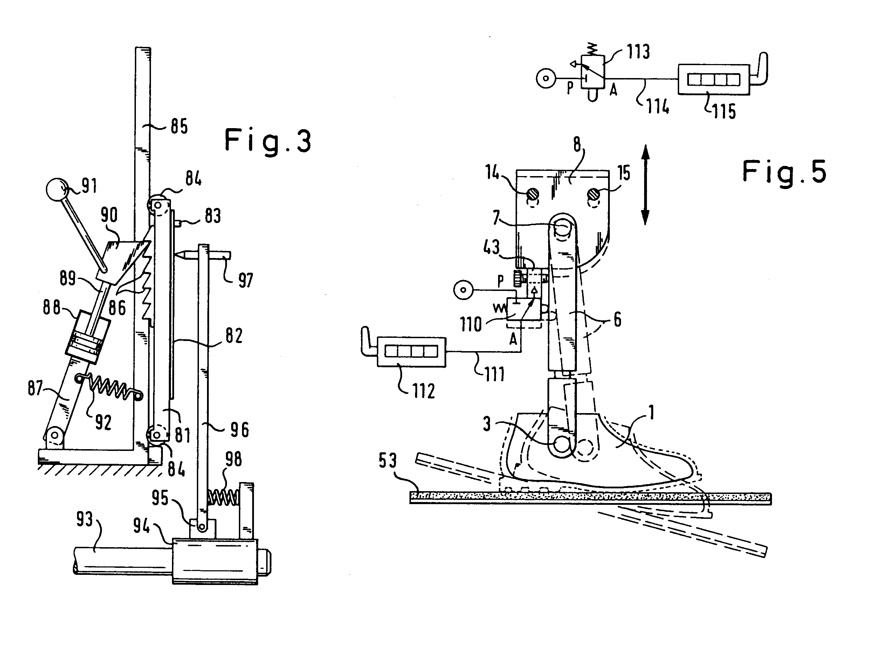

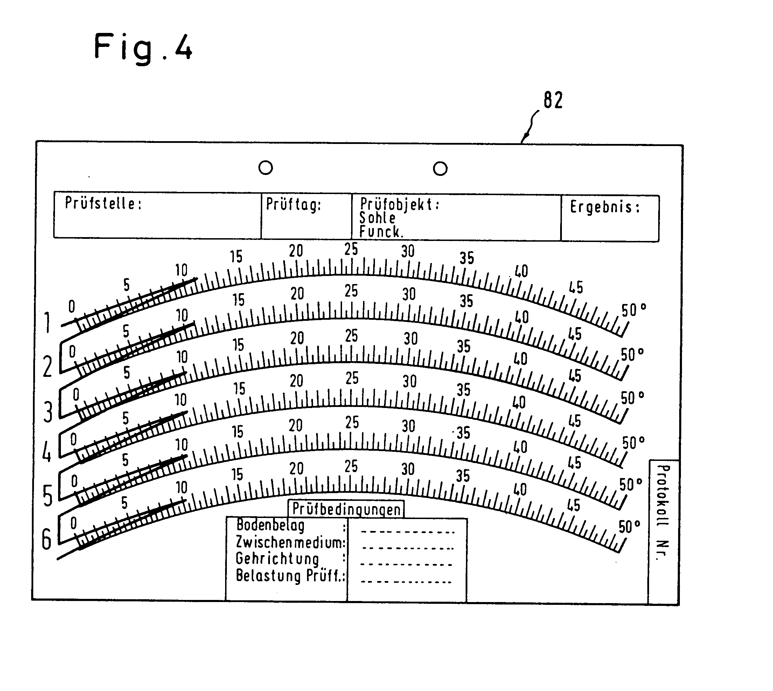

Wenn die Versuchsergebnisse von Meßreihen schriftlich fixiert werden sollen, kann eine Anzeigeneinrichtung nach Fig. 3 mit speziellen Registrierbögen nach Fig. 4 verwendet werden. Diese Anzeigeneinrichtung enthält eine plattenförmige Halterung 81, an deren freier Fläche ein in Fig. 4 dargestellter Registrierbogen 82 durch Aufstecken auf Stifte 83 festgelegt wird. Die Halterung 81 läuft über Rollen 84 an vertikalen Führungen 85 und trägt an ihrer Rückseite eine Verzahnung 86. An einem Schwenklager 87 sitzt stirnseitig ein Druckmittelzylinder 88, an dessen Kolbenstange 89 eine Sperrklinke 90 befestigt ist. Mittels eines Handgriffs 91 läßt sich die Sperrklinke 90 zusammen mit dem Druckmittelzylinder 88 und der Schwenkhalterung 87 gegen die Kraft einer Feder 92 aus der in Fig. 3 dargestellten Lage verschwenken, so daß die Sperrklinke 90 von der Verzahnung 86 freikommt und die plattenförmige Halterung 81 in ihre untere Ausgangsstellung z.B. durch Schwerkraft bewegt wird.

Auf einem der Lagerzapfen 57 bzw. 58 der Vorrichtung nach Fig. 2 bzw. auf dessen Verlängerung 93 ist eine Muffe 94 befestigt, die an einer Lasche 95 einen in Zeichenebene schwenkbaren Stab 96 mit einem daran quer befestigten Schreibstift 97 trägt. Der Schreibstift 97 wird von einer Feder 98 mit einer relativ geringen Kraft gegen das Registrierblatt 82 gedrückt.

Der in Fig. 4 dargestellte Registrierbogen enthält insgesamt sechs kreisbogenförmige Meßskalen, die mit gleichen Zwischenabständen parallel übereinander angeordnet sind. Auf der linken Seite jeder Meßskala ist eine Meßkurve aufgezeichnet, deren Spitze den bei jeder Meßreihe erhaltenen dynamischen Grenzwinkel der Haftreibung angibt. Wie ersichtlich, liegt dieser Grenzwinkel bei den Meßreihen drei bis sechs etwa konstant bei 10,5°. Die Aufzeichnung der Kurven der insgesamt sechs Meßreihen erfolgt derart, daß der Druckmittelzylinder 88 nach Ansprechen der Schalter 40 der Prüfvorrichtung nach Fig. 1, 2, d. h. nach dem Durchrutschen des Schuhs auf der mit dem überschrittenen Grenzwinkel geneigten Unterlage 53, betätigt wird und durch Ausfahren seines Kolbens die in die Verzahnung 86 eingreifende Sperrklinke 90 die Halterung 81 mit dem Registrierbogen 82 um einen Betrag anhebt, der dem Abstand zwischen zwei Skalenreihen auf dem Registrierbogen entspricht. In dieser Lage wird die plattenförmige Halterung z. B. durch eine ausreichend große Reibung an der Führung 85 oder durch eine Klemmung bzw. eine lösbare Ratsche arretiert, woraufhin dann die nächstfolgende Meßreihe durchgeführt werden kann. Nach Beendigung einer Meßreihe wird der Kolben des doppeltwirkenden Druckmittelzylinders 88 eingefahren, wobei die Sperrklinke 90 dann unter der Wirkung der Zugfeder 92 in die nächstuntere Kerbe der Verzahnung 86 hineingezogen wird. Nach der letzten Meßreihe erfolgt das Wegschwenken der Sperrklinke 90 mit Hilfe des Handgriffes 91 und das Zurückstellen der plattenförmigen Halterung 81 in die dargestellte Ausgangsposition.

Der in Fig. 4 dargestellte Registrierbogen weist neben den kreissegmentförmigen Winkelskalen Felder für die Eintragung besonderer Prüfbedingungen sowie an seinem oberen Rand eine - genormte - Lochung auf, mit welcher er an den Stiften 83 der plattenförmigen Halterung festgelegt wird. Zweckmäßigerweise haben die Registrierbögen Din A4-Format.

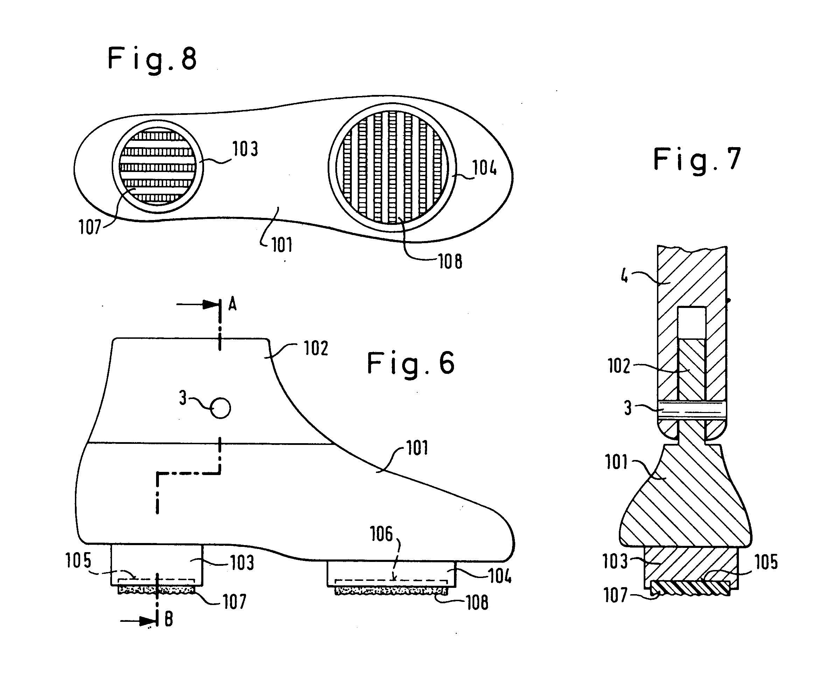

Die in Fig. 5 dargestellte Ausführung entspricht in ihrer Funktionsweise zur Bestimmung des Haftreibungsgrenzwinkels der Vorrichtung nach Fig. 1 und 2. Aus diesem Grunde sind die einander entsprechenden Bauteile mit den gleichen Bezugszeichen versehen. Neben den - hier als durchgehende Bauteile dargestellten - Laschen 6 ist ein pneumatischer Schalter 110 am Anschlag 43 montiert, der über eine Leitung 111 mit einem Zählwerk 112 verbunden ist. Der Stößel dieses Schalters 110 wird von der in ihrer unbelasteten Normalstellung befindlichen Lasche 6 geschlossen gehalten, so daß die am Anschluß P anstehende Druckluft abgesperrt ist. Sobald der Prüffuß 1 bei entsprechender Neigung des Belags 53 - wie gestrichelt dargestellt - zu gleiten beginnt, wird die Lasche 6 aus ihrer in durchgezogenen Linien dargestellten Normallage in die gestrichelt dargestellte Position ausgelenkt und gibt den Stößel des Schalters 110 frei, wodurch der Schalter öffnet und die Druckluft vom Anschluß P auf den Anschluß A schaltet. Über diesen Anschlag A strömt die Druckluft über die Leitung 111 und ggf. ein zusätzliches Steuerglied zum Zählwerk 112, das den Gleitschritt numerisch anzeigt. Da der Prüffuß 1 nur eine vom eingestellten Arbeisrhythmus der Vorrichtung bestimmte kurze Zeitspanne den schräggestellten Belag 53 kontaktiert, hat er keine Zeit, um völlig abzurutschen. Beim nächstfolgenden Abhebevorgang kehrt die Lasche 6 in ihre durchgezogen dargestellte Normallage zurück und drückt den Stößel des Schalters 110 wieder ein, wodurch der Anschluß A entlüftet und das Zählwerk 112 für einen weiteren Zählschritt vorbereitet wird. Dieser Vorgang wiederholt sich so lange, wie die Gleitgeschwindigkeit eine Gleitzeit zuläßt, die länger als eine Aufstandszeit des Schuhes auf dem geneigten Bodenbelag ist. Die sich schrittweise vergrößernde Neigung des Bodenbelags 53 führt zu einem Anstieg der Gleitgeschwindigkeit und zu einer Verkürzung der Aufstandszeit. Wenn das Zeitintervall bis zum völligen Ausgleiten kürzer ist als das Aufstands-Zeitintervall, dann rutscht der Prüffuß auf dem Belag vollständig ab, was den Prüfvorgang beendet.

Im oberen Teil der Fig. 5 ist eine weitere Ausgestaltung dargestellt, die als Ersatz für die mechanisch arbeitende Registriereinrichtung nach Fig. 3 verwendet werden kann. An einer geeigneten Stelle, z. B. an dem bügelförmigen Rahmen 41 gemäß Fig. 2, ist ein weiterer pneumatischer Schalter 113 montiert, der von der Tragplatte 8 betätigt wird, wenn diese sich bei Beginn eines Prüfvorgangs nach abwärts bewegt. Dieser Schalter 113 betätigt über eine Steuerdruckleitung 114 und ggf. ein zusätzliches Steuerglied ein weiteres Zählwerk 115, das alle Prüfschritte bis zum Abrutschen des Prüffußes und Abschalten der Vorrichtung zählt. Da bei jedem Prüfschritt der Bodenbelag 53 um ein festes Winkelmaß verstellt wird, kann aus der Anzahl der vom Zählwerk 115 erfaßten Schritte bis zum Abrutschen der Haftreibungs-Grenzwinkel auf einfache Weise berechnet werden. Die Anzahl der in diesem Zählwerk 115 festgehaltenen Prüfschritte, also die Anzahl der Zyklen pro Prüfvorgang, kann zusammen mit der im Zählwerk 112 festgehaltenen Anzahl an Gleitschritten in einem - nicht dargestellten - Drucker zu einem kompletten Prüfprotokoll ausgedruckt werden.

In den Fig. 6 bis 8 ist ein neuer Prüffuß dargestellt, der einen leistenförmigen Körper 101 enthält, dessen Oberteil 102 als Gelenklasche ausgebildet ist und am Klemmgelenk-Gestänge der Vorrichtung nach Fig. 1 bzw. 2 zwischen den beiden Laschen 4 mittels des Gelenks 3 - statt des in Fig. 1 und 2 dargestellten Leistens 1 - befestigt wird. An seinem Boden weist der leistenförmige Körper 101 im Absatzbereich und im Ballenbereich je einen Klotz 103, 104 auf, in deren Unterfläche je eine kreisrunde Aufnahme 105, 106 eingearbeitet ist. Wie aus Fig. 7 ersichtlich, werden kreisrunde Zuschnitte 107, 108 aus einem an seiner Unterseite ggf. mit Profilrillen versehenem plattenförmigen Sohlenmaterial eingesetzt und so fixiert, daß sie während der durchzuführenden Meßreihen nicht herausfallen. Wie in Fig. 7 gezeigt, können die Zuschnitte 107, 108 gegeneinander so verdreht positioniert werden, daß die Profilrillen in unterschiedlichen Richtungen verlaufen. Die beiden Zuschnitte 107, 108 können auch aus verschiedenen Sohlenmaterialien, wie Leder bzw. Gummi oder verschiedene Arten von Kunststoffen, bestehen. Als besonders zweckmäßig haben sich Zuschnitte für den Absatzbereich von 50 mm und für den Ballenbereich von 70 mm Durchmesser erwiesen, da die Größe dieser Zuschnitte in etwa den entsprechenden Aufstandsflächen eines durch den Träger belasteten Schuhs entsprechen und das Ausstanzen derartiger Zuschnitte aus plattenförmigem Sohlenmaterial mit im Handel erhältlichen Stanzeisen möglich ist. Die

7

kreisförmige Ausbildung der Zuschnitte gestattet ferner eine beliebige Ausrichtung von Profilrillen durch einfaches Verdrehen des jeweiligen Zuschnitts in seine Aufnahme. Um den tatsächlichen Abmessungen eines normalen Schuhs Rechnung zu tragen, ist die Höhe des hinteren Klotzes 103 um das Maß der Absatzsprengung eines Schuhs größer als die Höhe des vorderen Klotzes 104 im Ballenbereich, wobei die Bemessung der Klotzhöhen auch die Materialstärken von Brandsohlen und Laufsohlen berücksichtigt. Durch diese Maßnahme wird gewährleistet, daß der neue Prüffuß mit den eingesetzten Zuschnitten dieselben Abmessungsverhältnisse gegenüber dem Knöckelgelenk hat wie ein auf einem Leisten aufgespannter fertiger Schuh.

Die Erfindung ist nicht auf die vorstehenden Ausführungsbeispiele beschränkt. So können z. B. andere Antriebsorgane für die Bewegungen der Einzelteile, z. B. des Gewichts 15 bzw. der plattenförmigen Halterung 81 sowie für das Verstellen des Neigungswinkels des Bodenbelagsträgers gewählt werden, beispielsweise Elektromotoren und geeignete Getriebe. Ferner besteht eine Konstruktionsfreiheit in der Auslegung und Art der verwendeten Gelenke.

Darüber hinaus kann die Steuerung der verschiedenen Antriebe zur Ausführung der Bewegungen durch eine zentrale Steuereinheit erfolgen, so daß ein gesamter Prüfzyklus automatisch abläuft und registriert wird.

Die Anzeigeneinrichtung mit dem Registrierblatt, die Einrichtung zur Erfassung des Gleitwinkels sowie auch der Prüfschuh können auch in Verbindung mit anderen Prüfvorrichtungen zur Ermittlung des dynamischen Grenzwinkels der Haftreibung von Schuhen bzw. Schuhsohlen auf einem Untergrund angewendet werden.

**Patentansprüche**

1. Verfahren zum Ermitteln des dynamischen Grenzwinkels der Haftreibung von Schuhen auf einem Untergrund, dadurch gekennzeichnet, daß ein auf einen Leisten (1,101) gespannter Schuh (2) mit einer einstellbaren Kraft mehrfach nacheinander auf den Untergrund (53) aufgesetzt und wieder abgehoben wird, wobei vor jedem Aufsetzen des Schuhs (2) der Neigungswinkel des Untergrundes (53) genüber dem vorhergehenden Neigungswinkel um einen bestimmten Winkel erhöht wird, daß dieses Vorgehen so lange wiederholt wird, bis der Schuh (2) beim Aufsetzen gleitet, und daß beim Beginn der Gleitphase des Schuhs (2) der Neigungswinkel als dynamischer Grenzwinkel bestimmt wird.

2. Verfahren nach Anspruch 1, dadurch gekennzeichnet, daß der Schuh (2) vor jedem Aufsetzen mit dem Neigungswinkel des vorhergehenden Neigungswinkels des Untergrundes (53) geneigt ist und eine Verdrehung seines Leistens (1) um eine horizontale und zur Schuhlängsachse senkrechte Achse im Knöchelgelenk (3) des Leistens (1) durch eine vorbestimmte Hemmung einer Verdrehbremse verhindert wird bis während des Aufsetzens des Schuhs (2) auf den Untergrund die Hemmung der Verdrehbremse überwunden wird und der Schuh (2) bis zum Neigungswinkel des Untergrundes gedreht wird.

3. Verfahren nach Anspruch 1 oder 2, dadurch gekennzeichnet, daß vor jedem Absenken des Schuhs (2) der Leisten mit dem Schuh (2) parallel zur Achsrichtung des Knöchelgelenkes querverschoben wird, so daß der Schuh (2) nicht auf einen Bodenbelagsbereich aufgesetzt wird, auf den er vorher schon gesetzt worden ist.

4. Verfahren nach einem der Ansprüche 1 bis 3, dadurch gekennzeichnet, daß der Untergrund so eingestellt wird, daß die Achse des am Leisten angebrachten Knöchelgelenks mit seiner Schwenkachse zusammenfällt.

5. Verfahren nach einem der Ansprüche 1 bis 4, dadurch gekennzeichnet, daß der Beginn der Gleitphase und der eigentliche Rutschvorgang des Schuhs gesondert erfaßt und registriert werden.

6. Vorrichtung zum Ermitteln des dynamischen Grenzwinkels der Haftreibung von Schuhen auf einem Untergrund mit einer in ihrer Neigung verstellbaren Tragkonstruktion (50) für einen Untergrund (53), auf den der zu prüfende Schuh (2) aufgelegt wird, und mit Stuermitteln (40), die beim Abrutschen des Schuhs (2) auf dem Untergrund (53) den jeweiligen Neigungswinkel der Tragkonstruktion (SO) anzeigen; dadurch **gekennzeichnet,** daß ein den Schuh (2) tragender Leisten (1, 101) über ein Klemmgelenk-Gestänge (3 bis 7) an einer Hubvorrichtung (36) befestigt und mit einstellbarer Kraft mehrfach nacheinander auf den Untergrund (53) absenkbar ist.

7. Vorrichtung nach Anspruch 6, dadurch gekennzeichnet, daß zum Erzeugen der Absenkkraft Gewichte (21) auf eine an Ständern (23, 24) geführte Tragplatte (20) auflegbar sind.

8. Vorrichtung nach Anspruch 6 oder 7, dadurch gekennzeichnet, daß das Gelenkgestänge ein Knöchelgelenk (3) mit einstellbarer Hemmung zwischen dern Leisten (1,101) und einer, Schelle (4),
ein feststellbares Kugelgelenk (5) zwischen der Schelle (4) und zwei Laschen (6), sowie ein Gelenk (7) mit Kugelraste (10,11) zwischen den beiden Laschen (6) und einem vertikalen Tragelement (8) aufweist, wobei das obere Ende der Schelle (4) über das Kugelgelenk (5) mit den Laschen (6) verbunden ist, die Laschen (6) mittels des Gelenkes (7) an dem Tragelement (8) gelenkig angehängt sind, und die Kugelraste (10,11) zwischen den beiden Laschen (6) angeordnet ist.

9. Vorrichtung nach Anspruch 8,
dadurch gekennzeichnet,
daß die Tragkonstruktion (50) einen motorisch schwenkbaren formsteifen Träger (51) mit seitlichen in der Achse des Knöchelgelenks (3) angeordneten Lagerzapfen (57, 58) aufweist, auf dem der Bodenbelag (53) auf einem verstellbaren Einsatz (52) angeordnet ist.

10. Vorrichtung nach Anspruch 9,
dadurch gekennzeichnet,
daß ein auf die Aufwärtsbewegung der Hubvorrichtung (36) ansprechendes Stellglied (65, 75) das Neigen der Tragkonstruktion (50) um einen vorgegebenen Winkelschritt auslöst.

11. Vorrichtung nach einem der Ansprüche 8 bis 10,
dadurch gekennzeichnet,
daß das Tragelement (8) des Klemmgelenk-Gestänges horizontal verstellbar ist und einen verstellbaren Anschlag (43) für die Laschen (6) trägt.

12. Vorrichtung nach einem der vorangehenden, an Anspruch 9 anhängenden Ansprüche,
dadurch gekennzeichnet,
daß an einem der Lagerzapfen (57, 58) der Tragkonstruktion (50) eine Anzeigevorrichtung für den jeweilig eingestellten Neigungswinkel der Tragkonstruktion angeschlossen ist.

13. Vorrichtung nach Anspruch 12,
dadurch gekennzeichnet,
daß die Anzeigevorrichtung eine stufenweis verstellbare plattenförmige Halterung (81) für einen mehrere kreissegmentförmige parallele Winkelskalen enthaltenden Registrierbogen (82) sowie einen am ggf. verlängerten Lagerzapfen (57 bzw. 58) drehfest montierten Schwenkstab (96) aufweist, der einen auf dem Registrierbogen (82) anliegenden Schreibstift (97) trägt, wobei der Schwenkstab (96), die Halterung (81) und der Registrierbogen (82) senkrecht auf dem verlängerren Lagerzapfen (57; 58) stehen

14. Vorrichtung nach Anspruch 13,
dadurch gekennzeichnet,
daß die plattenförmige Halterung (81) an einer Führung (85) mittels eines Linearantriebs (88) sowie einer in eine Verzahnung (86) eingreifenden Sperrklinke (90) um den Abständen der Winkelskalen auf dem Registrierbogen (82) entsprechende Beträge verstellbar sowie in den eingestellten Positionen arretierbar ist.

15. Vorrichtung nach Anspruch 14,
dadurch gekennzeichnet,
daß der Linearantrieb (88) von den Steuermitteln (40) der Hubvorrichtung angesteuert ist.

16. Vorrichtung nach einem der Ansprüche 6 bis 15,
dadurch gekennzeichnet,
daß im Auslenkbereich der Laschen (6) ein Sensor (110) angeordnet ist, der ihre Auslenkung aus der unbelasteten Normalstellung erfaßt und über eine angeschlossene Anzeige registriert.

17. Vorrichtung nach Anspruch 16,
dadurch gekennzeichnet,
daß der Sensor ein am Anschlag (43) montierter pneumatischer Schalter (110) ist, der bei Beginn der Auslenkung der Laschen (6) öffnet und ein Zählwerk für die Anzahl der folgenden Schrittzyklen aktiviert.

**Claims**

1. A method of ascertaining the dynamic limit angle of frictional engagement between shoes and a tread surface, characterised in that a shoe (2) clamped on a last (1, 101) is repeatedly and consecutively applied to and removed from a tread surface (53) with an adjustable force, the tread surface angle of inclination being increased by a predetermined amount above the previous angle before each application of the shoe (2), the procedure is repeated until the shoe (2) slips when applied and at the start of the slipping phase of the shoe (2) the angle of inclination is determined as the dynamic limit angle.

2. A method according to claim 1, characterised in that before each application the shoe (2) is inclined at the inclination angle of the previous inclination angle of the tread surface (53) and rotation of its last (1) around an axis in the ankle joint (3) of the last (1), the latter axis being horizontal and perpendicular to the longitudinal axis of the shoe, is prevented by a predetermined braking applied by a rotational brake until the braking applied thereby is overcome during the application of the shoe (2) to the tread surface and the shoe (2) is turned as far as the angle of inclination of the tread surface.

3. A method according to claim 1 or 2, characterised in that before each lowering of the shoe (2) the last is shifted transversely with the shoe (2) parallel to the axial direction of the ankle joint so that the shoe (2) is not applied to an area of the floor covering to which it has been applied previously.

4. A method according to any of claims 1 to 3, characterised in that the tread surface is so adjusted that the axis of the ankle bone on the last coincides with its pivot axis.

5. A method according to any of claims 1 to 4, characterised in that the start of the sliding or slipping phase and the actual slipping of the shoe are detected and recorded separately.

6. An apparatus for ascertaining the dynamic limit angle of the frictional engagement between shoes and a tread surface, the apparatus comprising an adjustably inclinable support structure (50) for a tread surface (53) to which the shoe (2) to be tested as applied, the apparatus also comprising control means (40) which in response to a sliding of the shoe (2) on the tread surface (53) indicate the angle of inclination of the support structure (50), characterised in that a last (1, 101) carrying the shoe (2) is secured by means of a clamping articulation linkage (3 - 7) to a lifting device (36) and can be lowered with an adjustable force repeatedly and consecutively on to the tread surface (53).

7. An apparatus according to claim 6, characterised in that to produce the lowering force weights (21) can be placed on a support plate (20) guided on columns (23, 24).

8. An apparatus according to claim 6 or 7, characterised in that the articulation linkage comprises: an ankle joint (3) with adjustable clamping between the last (1, 101) and a clip (4); a locatable ball joint (5) between the clip (4) and two links (6); and an articulation (17) having a ball catch (10, 11) between the two links (6) and a vertical support element (8), the top end of the clip (4) being connected by way of the ball joint (5) to the links (6), the same being articulatedly suspended by means of the joint (7) on the support element (8), the ball catch (10, 11) being disposed between the two links (6).

9. An apparatus according to claim 8, characterised in that the support structure (50) has a dimensionally rigid carrier (51) pivotable by a motor and having lateral journals (57, 58) disposed on the axis of the ankle joint (3), the tread surface (53) being disposed on an adjustable insert (52) on the support (51).

10. An apparatus according to claim 9, characterised in that an actuator (65, 75) responding to the ascent of the lifting device (36) triggers the tilting of the support structure (50) through a predetermined angle step.

11. An apparatus according to any of claims 8 to 10, characterised in that the support element (8) is horizontally adjustable and has an adjustable abutment (43) for the links (6).

12. An apparatus according to any of the previous claims depending upon claim 9, characterised in that display means for displaying the inclination angle to which the support structure (50) has been set is connected to one of the bearing pins (57, 58).

13. An apparatus according to claim 12, characterised in that the display means comprise: a stepwise adjustable plate-like mounting (81) for a recording sheet (82) having a number of circle-segment parallel angle scales; and a pivoting rod (96) mounted on a possibly prolonged bearing pin (57 or 58) to corotate therewith, the pivoting rod (96) carrying a recording pen (97) in contact with the recording sheet (82), the pivoting rod (96), mounting (81) and recording sheet (82) being disposed vertically on the prolonged bearing pin (57; 58).

14. An apparatus according to claim 13, characterised in that the plate-like mounting (81) is adjustable on a guide (85), by means of a linear drive (88) and of a pawl (90) engaging in toothing (86), by amounts corresponding to the increments of the angle scales on the recording sheet (82) and is lockable in the positions in which it is set.

**15.** An apparatus according to claim 14, characterised in that the linear drive (88) is triggered by the control means (40) of the lifting device.

**16.** An apparatus according to any of claims 6 to 15, characterised in that a sensor (110) is disposed in the deflection zone of the links (6), detects the deflection thereof from their unloaded normal position and records such deflection by way of an associated display.

**17.** An apparatus according to claim 16, characterised in that the sensor is a pneumatic switch (110) which is disposed on the abutment (43), opens at the start of deflection of the links (6) and activates a counter to count the following step cycles.

**Revendications**

**1.** Procédé pour déterminer l'angle limite dynamique de l'adhérence de chaussures sur une surface sous-jacente, caractérisé en ce que l'on pose une chaussure (2) montée sur une forme (1, 101) successivement à plusieurs reprises sur la surface sous-jacente (53) avec une force réglable et on la soulève à nouveau à chaque fois, en augmentant d'un angle déterminé l'angle d'inclinaison de la surface (53) par rapport à l'angle d'inclinaison précédent avant chaque pose de la chaussure (2), que l'on répète ce processus jusqu'à ce que la chaussure (2) glisse au moment de la pose et que l'on détermine l'angle d'inclinaison au début de la phase de glissement de la chaussure (2) comme angle limite dynamique.

**2.** Procédé selon la revendication 1, caractérisé en ce que, avant chaque pose, on incline la chaussure (2) sous l'angle correspondant à l'angle d'inclinaison précédent de la surface (53) et on empêche la rotation de sa forme (1) autour d'un axe horizontal et transversal à l'axe longitudinal de la chaussure, situé dans l'articulation tibio-tarsienne (3) de la forme (1), par un freinage prédéterminé exercé au moyen d'un frein de rotation, jusqu'à ce que le freinage exercé par le frein soit vaincu pendant la pose de la chaussure (2) sur la surface et que la chaussure (2) soit tournée jusqu'à l'angle d'inclinaison de la surface.

**3.** Procédé selon la revendication 1 ou 2, caractérisé en ce que, avant chaque abaissement ou pose de la chaussure (2), on déplace la forme avec la chaussure (2) transversalement, parallèlement à l'axe de l'articulation tibio-tarsienne, de manière que la chaussure (2) ne soit pas posée sur une partie d'un revêtement de sol sur laquelle elle a déjà été posée précédemment.

**4.** Procédé selon une des revendications 1 à 3, caractérisé en ce que l'on ajuste la surface sous-jacente de manière que l'axe de l'articulation tibio-tarsienne, disposée sur la forme, coïncide avec l'axe de basculement ou d'inclinaison de la surface.

**5.** Procédé selon une des revendications 1 à 4, caractérisé en ce que l'on détecte et enregistre séparément le début de la phase de glissement et le glissement complet proprement dit de la chaussure.

**6.** Appareil pour déterminer l'angle limite dynamique de l'adhérence de chaussures sur une surface sous-jacente, comprenant une construction portante (50) dont l'inclinaison est réglable et qui sert de support pour une surface (53) sur laquelle est posée la chaussure (2) à tester, ainsi que des moyens de commande (40) qui produisent l'affichage de l'angle d'inclinaison de la construction portante (50) lorsque la chaussure (2) glisse sur la surface sous-jacente (53),
caractérisé en ce que la chaussure (2) est portée par une forme (1, 101) fixée par l'intermédiaire d'un système articulé (3 à 7) comprenant un joint blocable à un dispositif de levage (36) et peut être abaissée ou posée successivement à plusieurs reprises avec une force réglable sur la surface (53).

**7.** Appareil selon la revendication 6, caractérisé en ce que des poids (21) peuvent être placés sur une plaque porteuse (20) guidée sur des montants (23, 24) afin de produire la force d'abaissement.

**8.** Appareil selon la revendication 6 ou 7, caractérisé en ce que le système articulé comporte une articulation tibio-tarsienne (3) à freinage réglable entre la forme (1, 101) et une chape femelle (4), une articulation ou joint à rotule (5) blocable entre la chape (4) et deux tringles (6), ainsi qu'une articulation (7) avec un déclic à bille (10, 11) entre les deux tringles (6) et un élément de support vertical (8), l'extrémité supérieure de la chape (4) étant reliée aux tringles (6) par l'intermédiaire de l'articulation à rotule (5), les tringles (6) étant suspendues de façon articulée à l'élément de support (8) par l'intermédiaire de l'articulation (7), et le déclic à bille (10, 11) étant disposé entre les deux tringles (6).

9. Appareil selon la revendication 8, caractérisé en ce que la construction portante (50) comporte un support (51) de forme rigide, pouvant être animé d'un basculement par un moteur, support qui est muni de tourillons (57, 58) placés latéralement dans l'axe de l'articulation tibio-tarsienne (3), et porte un insert (52) réglable sur lequel est disposé un revêtement de sol (53).

10. Appareil selon la revendication 9, caractérisé en ce que l'inclinaison de la construction portante (50) d'un pas angulaire préfixé, est déclenchée par un organe d'asservissement (65, 75) réagissant au mouvement de montée du dispositif de levage (36).

11. Appareil selon une des revendications 8 à 10, caractérisé en ce que l'élément de support (8) du système articulé à joint blocable, est déplaçable horizontalement et porte une butée réglable (43) pour les tringles (6).

12. Appareil selon une des revendications précédentes rattachées à la revendication 9, caractérisé en ce qu'un dispositif d'affichage pour l'angle d'inclinaison instantané de la construction portante est raccordé à l'un des tourillons (57, 58) de la construction portante (50).

13. Appareil selon la revendication 12, caractérisé en ce que le dispositif d'affichage comporte un support (81) en forme de plaque pour une feuille d'enregistrement (82) portant plusieurs échelles angulaires parallèles en forme de segments de cercle, support qui est déplaçable de façon échelonnée, ainsi qu'une tige pivotante (96) calée sur un tourillon (57 ou 58) éventuellement prolongé, tige qui porte un stylo (97) ou analogue appliqué contre la feuille d'enregistrement (82), la tige pivotante (96), le support (81) et la feuille d'enregistrement (82) étant disposés verticalement sur le tourillon prolongé (57, 58).

14. Appareil selon la revendication 13, caractérisé en ce que le support (81) en forme de plaque est déplaçable sur un guidage (85) au moyen d'une commande linéaire (88) et d'un cliquet (90) en prise avec une denture (86), chaque déplacement correspondant à un espacement des échelles angulaires sur la feuille d'enregistrement (82), le support pouvant être arrêté aux positions ainsi établies.

15. Appareil selon la revendication 14, caractérisé en ce que la commande linéaire (88) est pilotée par les moyens de commande (40) du dispositif de levage.

16. Appareil selon une des revendications 6 à 15, caractérisé en ce qu'un capteur (110) est disposé dans la zone de déviation des tringles (6) pour détecter leur déviation de la position normale, où elles ne sont pas chargées, et pour enregistrer cette déviation au moyen d'un affichage raccordé.

17. Appareil selon la revendication 16, caractérisé en ce que le capteur est un commutateur pneumatique (110) monté sur la butée (43), capteur qui s'ouvre au début de la déviation des tringles (6) et actionne alors un compteur pour le nombre des cycles de pas consécutifs.

# Fig.1

# Fig.2

Fig. 5

Fig. 3

# Fig.4

82

| Prüfstelle: | Prüftag: | Prüfobjekt:<br>Sohle<br>Funck. | Ergebnis: |
|---|---|---|---|

Prüfbedingungen

Bodenbelag : - - - - - - - - - - -
Zwischenmedium: - - - - - - - - - - -
Gehrichtung : - - - - - - - - - - -
Belastung Prüff.: - - - - - - - - - - -

Protokoll Nr.

Fig.8

Fig.7

Fig.6

EP 0 264 526 B1